# FASCICULE DE BREVET EUROPEEN

(11) **EP 2 137 049 B1**
(45) Date de publication et mention de la délivrance du brevet: **27.06.2012**
(21) Numéro de dépôt: 08805508.2
(22) Date de dépôt: 24.04.2008
(51) Int. Cl.: B62D 21/15, B60R 19/34

(54) **VÉHICULE COMPRENANT UNE PROLONGE AVEC APPUI PERFECTIONNÉ**
FAHRZEUG MIT EINER ERWEITERUNG MIT VERBESSERTER UNTERSTÜTZUNG
VEHICLE HAVING AN EXTENSION WITH IMPROVED SUPPORT

(30) Priorité: 26.04.2007 FR 0703035
(43) Date de publication de la demande: 30.12.2009
(73) Titulaire: ArcelorMittal Tubular Products Vitry, 51300 Vitry-le-François (FR)
(72) Inventeur: DE QUEIROZ, Wilder, F-51300 Frignicourt (FR); DERCHU, Thierry, F-55000 Bar le Duc (FR); DESLANDE, Raymond, F-51300 Loisy sur Marne (FR)
(74) Mandataire: Plaçais, Jean Yves
(86) Numéro de dépôt international: PCT/FR2008/000591
(87) Numéro de publication internationale: WO 2008/145863

(56) Documents cités:
- EP-A- 1 251 054
- EP-A- 1 384 536
- EP-A- 1 653 113
- EP-A- 1 736 369
- DE-A1- 2 625 724
- DE-A1- 10 206 011
- DE-A1- 19 517 922
- DE-A1- 19 751 513
- FR-A1- 2 855 805
- FR-A1- 2 867 731
- GB-A- 1 396 388
- JP-A- 2002 249 067
- JP-A- 2004 189 062
- JP-A- 2005 104 236
- JP-A- 2005 104 335

## Description

L'invention concerne des pièces de sécurité pour véhicules.

Les voies avant de véhicules automobiles sont souvent équipées d'un dispositif de sécurité destiné à intervenir en cas de choc, composé de deux montages de pièces longitudinales, placés de chaque côté entre l'avant du véhicule et le châssis ou berceau de celui-ci. A l'avant, ces deux montages sont interconnectés par une pièce transversale, appelée poutre de liaison. La poutre de liaison est elle même reliée, par deux absorbeurs de chocs, à un organe de protection des piétons dit traverse piéton ou encore poutre piéton, situé tout à fait à l'avant. Les absorbeurs de chocs sont parfois intégrés à la traverse piéton. Un tel montage doit répondre à des cahiers de charges précis de comportement en cas de choc.

Un montage longitudinal de ce genre comprend le plus souvent les éléments suivants :
un tube présentant des altérations choisies pour satisfaire au cahier des charges en cas de choc à faible, moyenne et grande vitesse,
une pièce d'extrémité, dite "plaque avant", placée en extrémité du tube, côté avant du véhicule ; cette plaque avant est généralement perpendiculaire à l'axe du tube, ou bien inclinée de quelques dizaines de degrés sur celui-ci. Elle est munie de moyens permettant la fixation d'autres éléments de l'avant du véhicule tels que : absorbeur, ou traverse piéton, par exemple
   - à l'opposé, une seconde pièce d'extrémité, située du coté arrière du "tube". Elle a pour fonction de positionner lors du choc le composant en appui sur le châssis ou le berceau avant du véhicule,
éventuellement d'autres éléments.

La terminologie pour désigner ces pièces n'est pas totalement figée, et il existe plusieurs dénominations, comme "prolonge", ou "allonge" ou "longeronnet" ou encore "add-on". Au départ, la prolonge désignait le tube lui-même, et des prolonges "tubes" sont notamment décrites dans les demandes de brevets français FR 2 855 805 ou FR 2 887 211 de la Demanderesse. Aujourd'hui, la prolonge désigne plutôt l'ensemble du montage, et le tube lui-même est appelé " longeronnet". Le mot "allonge" lui aussi désigne plutôt l'ensemble du montage. De même, le mot "add-on" lui aussi désigne plutôt l'ensemble du montage.

Dans la présente demande de brevet, le mot "prolonge" désigne l'ensemble du montage.

Actuellement, les éléments de la prolonge sont généralement des pièces en acier, assemblées entre elles par soudage. Elles peuvent être aussi en aluminium.

Des scénarii de chocs sont décrits dans les cahiers de charges des constructeurs automobiles. Le point fondamental est le comportement au choc à grande vitesse ; mais il est également important que, sur des chocs à faible vitesse, plusieurs pièces, dont la prolonge, restent sensiblement non déformées, de sorte que la réparation se fasse en échangeant seulement les pièces déformables par nature, comme les absorbeurs. C'est ce qu'on appelle le choc "avec réparabilité".

De plus, selon ces scénarii, il est fréquent que les efforts encaissés par les composants ne s'exercent pas dans l'axe de la prolonge. Dans de tels cas les efforts exercés sur la prolonge peuvent se décomposer en une contrainte axiale et en un couple. Ceci complique le rôle de la prolonge, qui est d'absorber tout ou partie de l'énergie générée par le choc.

Les composants proposés dans les demandes de brevet FR 2 855 805 ou FR 2 887 211 permettent de répondre à différents cas de chocs frontaux de manière satisfaisante, que ce soit lors de chocs à faible vitesse (ou chocs dits "piétons" ou encore dits avec "réparabilité") ou lors de chocs à grande vitesse.

FR 2 855 805 et EP 1 631 752 décrivent des pièces comprenant un profil de section droite choisie, ce profil étant muni d'altérations localisées, de formes et de positions respectives choisies pour satisfaire sensiblement une loi donnée de déformation sous effort conjoint de compression dans l'axe de la pièce, et de couple d'axe perpendiculaire à un plan passant par cet axe, cette loi comportant une phase d'absorption d'énergie par bottelage, suivie d'un effacement de la pièce par rotulage, à partir d'au moins une zone d'altérations ayant une double fonction de bottelage et de rotulage et permettant d'initier le rotulage.

La Demanderesse s'est attachée à apporter des améliorations aux solutions actuellement mises en oeuvre, au vu notamment de différentes contraintes complémentaires, dont l'importance a été plus récemment reconnue, et sur lesquelles on reviendra plus loin.

Ces objectifs sont atteints par un véhicule selon la revendication 1.

L'invention porte sur un vehicule avec un dispositif mécanique, formant élément de structure allonge pour véhicule, destiné à encaisser au moins partiellement certains chocs, comprenant :
- une pièce allongée profilée ou tubulaire de section droite généralement polygonale, fermée ou ouverte,
- une première pièce d'extrémité, montée à une première extrémité de la pièce allongée, selon un angle proche de la perpendiculaire à l'axe de la pièce allongée, cette première pièce d'extrémité étant prévue pour fixation à d'autres éléments du véhicule.

Selon une caractéristique principale de l'invention :
- au voisinage de sa première extrémité, la pièce allongée comporte des dégagements, qui laissent subsister des zones ajustées ou carres, au voisinage d'arêtes de sa section droite,
- il est prévu entre la pièce allongée et la première pièce d'extrémité une fixation rigide qui maintient les zones ajustées, sensiblement en appui direct sur la première pièce d'extrémité.

Ainsi, les zones ajustées sont dimensionnées pour résister à des efforts de compression et à un couple de basculement lors de chocs, par exemple du type "avec réparabilité". De son côté, la fixation rigide est chargée de maintenir l'appui, dans les mêmes conditions de choc.

D'autres caractéristiques et avantages de l'invention apparaîtront à l'examen de la description détaillée ci-après, et des dessins annexés, sur lesquels :
- La figure la est une vue en perspective du tube d'une prolonge de type connu, rehaussée de lignes fictives mettant mieux en lumière ses formes,
- La figure 1b est une vue de dessus du tube de prolonge de la figure 1a,
- La figure 1c est une vue en perspective d'une pièce d'extrémité destinée à travailler avec le tube de prolonge de la figure 1a,
- La figure 1d est une vue en perspective d'une plaque ou platine destinée à être fixée à l'autre extrémité du tube de prolonge de la figure 1a,
- La figure 1e est une vue en perspective d'une bague allongée destinée à coopérer avec le tube de prolonge,
- La figure 1f est une vue en perspective montrant le tube de prolonge de la figure 1a fixée sur la plaque de la figure 1d,
- La figure 1g est une coupe suivant la ligne de coupe AA de la figure 1f,
- La figure 2a est une vue en perspective d'un tube de prolonge ici proposé, rehaussé de lignes fictives mettant mieux en lumière ses formes,
- La figure 2b est une vue de dessus du tube de prolonge de la figure 2a,
- La figure 2c est une vue en perspective d'une pièce d'extrémité destinée à travailler avec le tube de prolonge de la figure 2a,
- La figure 2d est une vue en perspective d'une plaque ou platine destinée à être fixée à l'autre extrémité du tube de prolonge de la figure 2a,
- La figure 2e est une vue en perspective d'une bague allongée destinée à coopérer avec le tube de prolonge de la figure 2a,
- La figure 2f est une vue en perspective montrant le tube de prolonge de la figure 2a fixée sur la plaque de la figure 2d,
- La figure 2g est une coupe suivant la ligne de coupe AA de la figure 2f,
- La figure 3a est une vue agrandie en perspective d'un mode de réalisation du tube d'une prolonge selon la présente invention,
- La figure 3b est une vue agrandie en perspective arrière d'un mode de réalisation d'une plaque ou platine d'une prolonge selon la présente invention,
- La figure 4 est une vue de dessus schématique du dispositif constitué de deux prolonges et d'une traverse de liaison, monté sur une voie avant, et
- Les figures 5a et 5b illustrent schématiquement une variante possible de l'invention.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

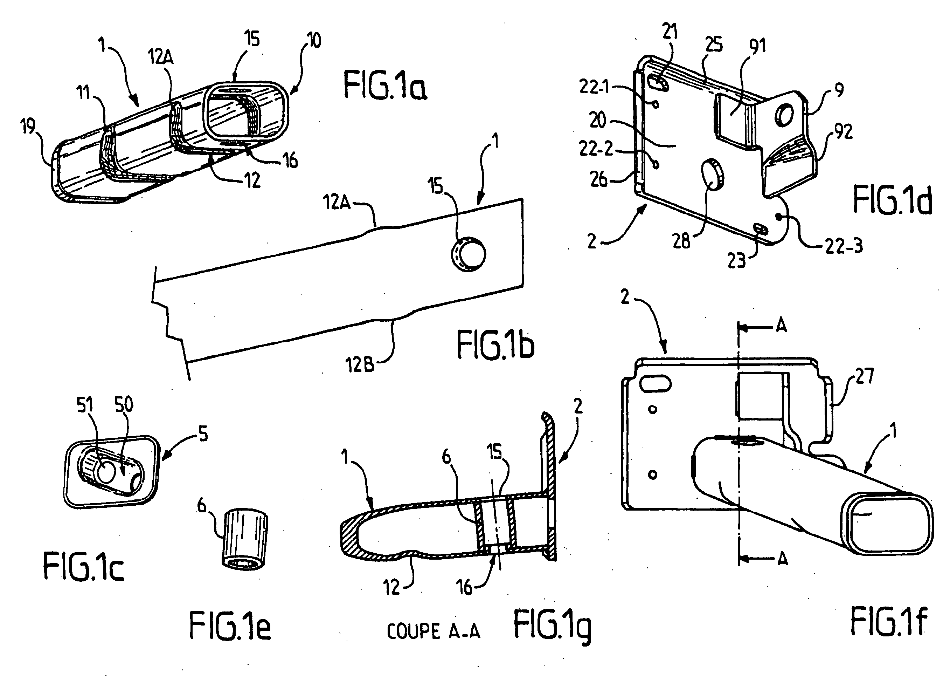

Sur la figure 1a, le tube de prolonge 1 est ici de section droite sensiblement rectangulaire.

Ce tube 1 comporte des altérations telles que 11 et 12, dont la position et forme sont bien définies. Dans l'exemple, où le tube mesure environ 530 mm de long :
- une première altération est prévue à environ 193 mm de l'extrémité gauche, par enfoncement sur une profondeur d'environ 9 mm, formant un creux dont la largeur au bord est d'environ 50 mm ;
- une seconde altération est prévue à environ 429 mm de l'extrémité gauche, par enfoncement sur une profondeur d'environ 4 mm, formant un creux dont la largeur au bord est d'environ 40 mm.

Des renflements apparaissent en regard de chaque altération, dans le sens perpendiculaire.

Ces altérations peuvent être réalisées de l'une des manières décrites dans FR 2 855 805.

L'extrémité 10 de la prolonge est usinée droite dans un plan qui est ici oblique sur l'axe du tube. Des trous 15 et 16 sont prévus au voisinage de cette extrémité 10.

L'autre extrémité 19 est conformée en un évasement, qui participe au montage de la pièce d'extrémité de la figure 1c, comme on le verra.

La vue de dessus de la figure 1b fait apparaître des renflements 12A et 12B qui correspondent aux renflements latéraux 12A et 12B qui font le pendant du creux 12 (il s'agit d'une "altération" de la famille de celles décrites dans les demandes de brevet FR 2 855 805 ou FR 2 887 211) sur la face inférieure (non visible) de la prolonge.

La figure 1b montre encore l'orifice 15, pour le passage d'une vis de fixation de la prolonge sur le pendard sur la figure 1a. La bague 6 (fig. 1c) placée à l'intérieur du tube formera entretoise.

La figure 1d illustre la plaque ou platine 2 d'extrémité de la prolonge. Cette platine comporte une zone généralement plane 20, conformée suivant les besoins à l'intérieur d'un véhicule, et munie d'orifices de fixation 22-1, 22-2 et 22-3 notamment, pour assurer le montage d'un organe avant tel qu'un absorbeur. Les orifices 21 et 23 sont au contraire destinés au positionnement de cet absorbeur et de tout autre élément comme une traverse (ou poutre) piéton reliant les deux absorbeurs.

La platine comporte encore un rebord supérieur 25, ainsi que deux rebords latéraux, comme visible en 26 ou 27 (figures 1d et 1f).

Elle reçoit, par exemple par soudure de son pied 91, une équerre 9, munie par ailleurs d'un déport 92, l'ensemble étant destiné à être fixé sur le pendard du véhicule.

Au centre de la platine est prévu un orifice de forme générale quasi circulaire, noté 28 dont la fonction est essentiellement de faciliter la mise en oeuvre d'un revêtement anti-corrosion (par exemple par cataphorèse du composant en acier qui servira à la protection anti-corrosion de l'ensemble allonge ou add-on après assemblage.

Comme illustré sur la figure 1f, selon l'état de la technique, l'extrémité 10 du tube de prolonge 1 est soudée sur la plaque ou platine avant 2. Ici, le tube 1 et la platine 2 sont en acier. Cette extrémité 10 encadre l'orifice 28. Les traits noirs épais matérialisent les cordons de soudure (figures 1d et 1f).

Du fait que, dans le mode de réalisation représenté, le tube 1 est fixé un peu obliquement sur la platine 2, la coupe AA va traverser le flanc de la prolonge. C'est pourquoi, la figure 1g fait apparaître à gauche une extrémité fermée. Elle fait apparaître également la traversée de la bague entretoise 6, avec ses orifices 15 et 16 (ce dernier à rebord vers l'intérieur), tandis qu'on voit également le bas de l'altération 12 sur cette même figure 1g.

Une telle solution a pu satisfaire les tests de base du cahier des charges général, tout du moins en ce qui concerne les chocs à grande vitesse, lors des essais. Par contre, des problèmes subsistent pour les autres types de chocs, et lorsqu'on veut passer au stade de la production. En effet, en production automobile, les composants doivent de par leur conception et leurs caractéristiques techniques garantir une très bonne reproductibilité et identité de comportement en matière d'absorption d'énergie et de déformation lors d'un choc (ce qu'on appelle "déformation programmée").

Lorsqu'un véhicule automobile se voit ajouter des composants de sécurité aux chocs, cela a pour effet d'alourdir l'avant de ce véhicule, généralement déjà trop lourd par rapport à l'arrière du fait de la présence du bloc moteur à l'avant plus les autres équipements placés à l'avant du véhicule, donc d'augmenter son inertie lors des chocs, et par conséquent d'aggraver le problème de sécurité aux chocs.

De plus, ces composants supplémentaires viennent s'intégrer dans un environnement moteur à l'avant du véhicule déjà très encombré et où les espaces disponibles pour intégrer de nouveaux composants sont très limités et aux contours volumétriques bien définis.

Il est donc souhaitable d'alléger le poids des composants ajoutés, tout en conservant ou en améliorant leur comportement en cas de choc, et en s'insérant dans le volume prévu. Considérant par exemple l'aluminium, plus léger que l'acier, on peut avoir les combinaisons suivantes :

| | Tube 1 | Plaque 2 |
|---|---|---|
| CLASSIQUE | Acier | Acier |
| Mixte 1 | Aluminium | Acier |
| Mixte 2 | Acier | Aluminium |
| Tout alu | Aluminium | Aluminium |

La combinaison "Mixte 2" est citée par souci d'exhaustivité, sachant qu'elle ne serait sélectionnée que dans des cas assez rares ou spéciaux.

Le tableau rappelle d'abord la situation "classique", dans laquelle les composants sont en acier(s), et réalisés à partir de différentes pièces assemblées par soudage. Il s'agit généralement d'un soudage avec métal d'apport, qui peut être réalisé selon la technique dite MIG (pour " Metal Inert Gas ").

Pour tenter d'alléger les véhicules ainsi équipés, une solution possible est l'utilisation de matériaux comme l'aluminium ou le magnésium, par exemple, qui ont des propriétés mécaniques compatibles avec les données du cahier des charges (en termes de performances globales), tout en restant nettement plus légers.

Les différents cas possibles sont listés dans le tableau (pour l'aluminium).

En termes de légèreté, le cas idéal est naturellement aluminium/aluminium. Mais on sait que le soudage aluminium/aluminium est délicat et onéreux.

Plus généralement, dans les cas où l'on assemble par soudage des éléments du même matériau (les éléments sont par exemple tous en acier, ou tous en aluminium), le soudage devient difficile si les éléments à assembler ont des épaisseurs trop différentes. En effet, on considère en général que le rapport entre épaisseurs d'éléments assemblés entre eux par soudage est au maximum de 1 à 2 dans le cas de l'aluminium et de 1 à 3 dans le cas de l'acier.

Mais l'assemblage de matériaux mixtes reste souvent nécessaire, en raison des caractéristiques mécaniques particulièrement sévères qu'il faut garantir. Et l'acier reste souvent le matériau approprié pour certaines pièces du composant. Par exemple, le cas "Mixte 1" peut se rencontrer là où la plaque pourrait être en aluminium, mais avec une épaisseur trop grande pour l'encombrement maximum autorisé, tandis que l'acier convient. L'acier peut avoir des caractéristiques mécaniques très élevées par rapport à l'aluminium (limite élastique notamment).

Il faut alors mettre en oeuvre des matériaux différents pour le tube de prolonge et pour la plaque. Et, lorsqu'il s'agit d'assembler des éléments réalisés dans des matériaux différents tels que l'acier et l'aluminium, par exemple, il n'existe pas actuellement de technique de soudage économiquement satisfaisante.

Plus généralement, quelle que soit la situation, la Demanderesse a observé des phénomènes gênants sur des prolonges dont les différents éléments étaient assemblés par soudage.

On sait en effet que, lors d'un assemblage par soudage des différents éléments d'une pièce, il existe une "zone affectée thermiquement" (ZAT dans le langage de l'homme du métier, ou, en anglais HAZ pour "Heat Affected Zone"). Dans cette zone, les éléments de la pièce subissent des modifications locales de leurs caractéristiques mécaniques. Il apparaît que ces modifications sont préjudiciables à leur comportement lors d'un choc.

En bref, l'assemblage par soudage risque d'altérer les caractéristiques mécaniques du composant.

Le problème de trouver une solution d'assemblage entre elles des pièces du composant, sans induire de modifications, même locales, de leurs caractéristiques mécaniques, reste donc entier à ce stade.

La Demanderesse a poursuivi ses travaux. Ainsi, des essais réels de "crash" ont été faits dans différentes conditions. Lors de chocs sous effort pouvant se décomposer en un effort axial et un couple, la Demanderesse a observé que :
- l'essentiel des contraintes est localisé dans les "carres" (ou angles) du tube de prolonge,
- tandis que les parois intermédiaires n'exercent qu'une faible part de la fonction d'absorption d'énergie laquelle s'effectue principalement dans les "carres".

Autrement dit, ces nouveaux tests ont montré que les parois intermédiaires (ou côtés du polygone) ont pour fonction principale d'assurer la liaison mécanique entre les carres du polygone constitutif du tube de prolonge. De ce fait on peut donc envisager, afin de répondre à l'objectif d'allègement, d'utiliser un tube dont l'épaisseur est variable dans sa section, c'est à dire :
- une épaisseur dans les carres rendant le composant apte à supporter les efforts tels que définis dans le cahier des charges, et par conséquent apte à suivre la loi de déformation requise,
- une épaisseur plus faible dans les faces du tube, épaisseur toutefois suffisante pour assurer la liaison mécanique adéquate entre les carres lors d'un choc.

Ainsi, les carres peuvent être augmentées en épaisseur.

De plus, la question de la précision géométrique de l'assemblage des différents éléments peut également être examinée sous l'angle du mode de transmission des efforts lors d'un choc qui, comme l'a constaté la Demanderesse, s'effectue principalement par les "carres" du tube de prolonge. Cela a pour conséquence qu'une contrainte technique qu'il est important de respecter est que l'assemblage de la face avant de la section du tube de prolonge avec la plaque avant soit réalisé de telle sorte que les "carres" du tube viennent en appui "parfait" (bien réparti) sur ladite plaque, au moins lors des chocs.

Ainsi, un premier aspect de l'invention est de réaliser l'appui par les carres. Un second aspect de l'invention est, au moins dans certains modes de réalisation, de répartir l'espace disponible en périphérie du tube entre :
- d'une part les carres, pour la qualité de l'appui carres sur plaque, et
- d'autre part les pattes ou languettes, pour la qualité de la fixation tube sur plaque

Au besoin, le tube est agencé pour avoir une plus grande épaisseur au niveau de ses coins, de sorte que les carres soient plus épaisses.

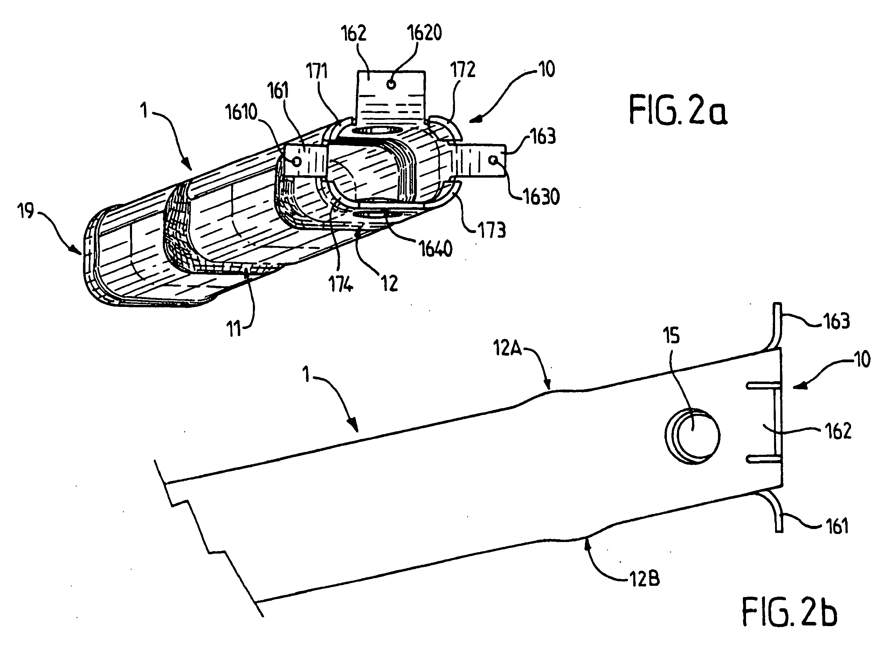

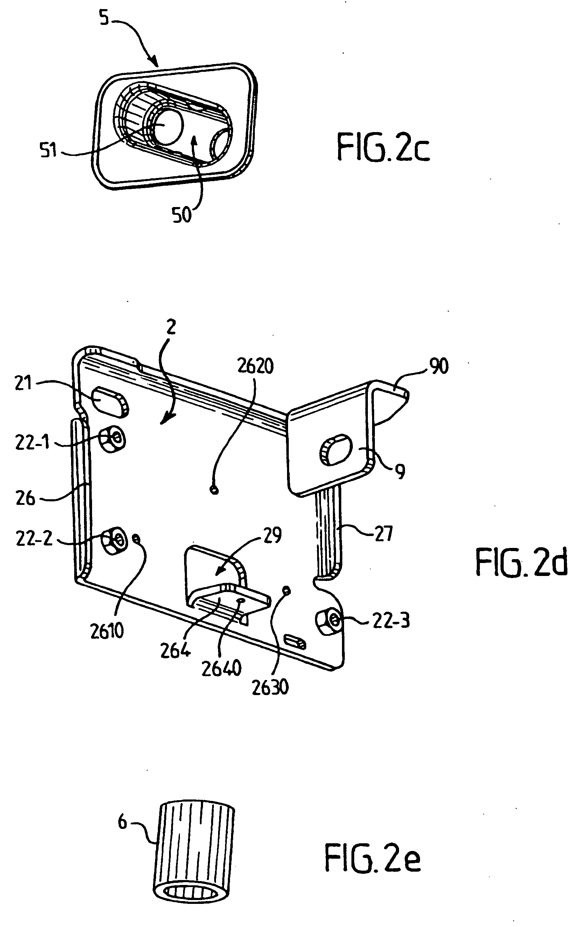

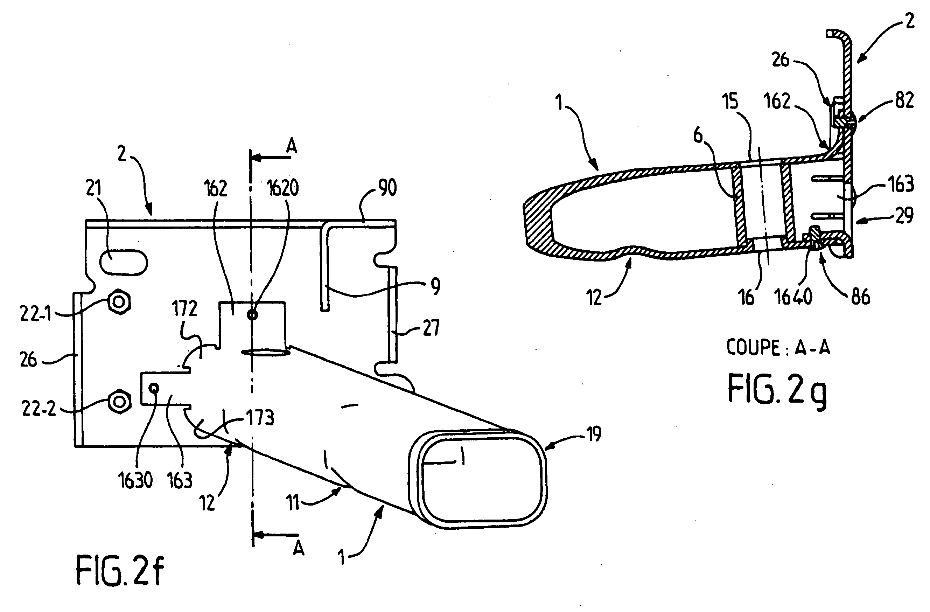

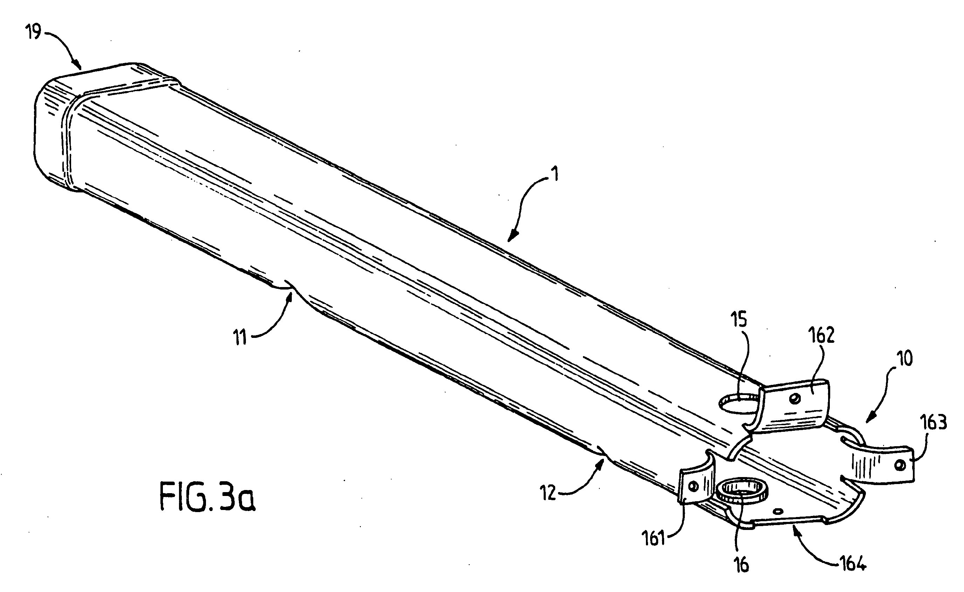

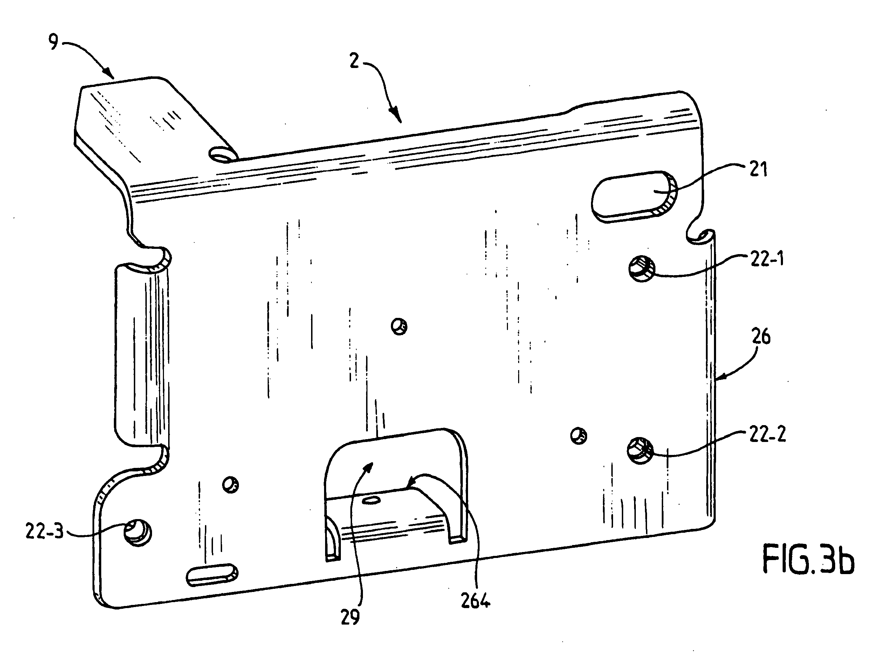

On décrira maintenant un mode de réalisation de l'invention, en référence aux figures 2 et 3.

Les figures 2a à 2g sont semblables aux figures 1a à 1g, et font apparaître les modifications apportées, qui seront seules décrites à nouveau.

Sur la figure 2a, l'extrémité 10 du tube de prolonge est maintenant conformée, sur trois de ses côtés, avec trois pattes 161 à 163, munies d'alésages positionnés avec précision. Sur chaque côté, la patte est intermédiaire entre les extrémités du côté concerné, sans atteindre ces extrémités.

Ici, le quatrième côté est muni d'une échancrure 164 (figure 3a), intermédiaire entre les extrémités de ce quatrième côté, sans atteindre celles-ci.

Sont ainsi définies aux quatre coins de l'extrémité 10 du tube de prolonge, quatre carres 171 à 174, sur lesquelles on reviendra.

La figure 2b est semblable à la figure 1b, hormis la présence des pattes et des carres. Par ailleurs, les pièces d'extrémité (coupelles) peuvent être serties au lieu d'être soudées.

Les figures 2c et 2e sont identiques aux figures 1c et 1e, respectivement.

La plaque de la figure 2d est par contre différente de celle de la figure 1d. Tout d'abord, le trou circulaire 28 est remplacé par la trace 29 de la découpe d'une quatrième patte 264, elle aussi munie d'un alésage 2640 positionné avec précision.

Une autre différence est la forme de l'équerre 9, qui est ici découpée dans la plaque 2, au lieu d'être soudée sur celle-ci.

Par ailleurs les points de fixation et bordures présentent des différences mineures par rapport au premier mode de réalisation décrit. La patte supérieure issue du tube empêche de mettre une équerre rapportée (impossibilité de montage). Cette dernière est donc issue de la platine.

La plaque comporte des alésages 2610, 2620 et 2630, positionnés avec précision pour correspondre aux alésages 1610, 1620 et 1630 des pattes 161, 162 et 163.

La figure 2f montre le tube de prolonge monté sur la plaque. On observe que, dans ce mode de réalisation, l'axe longitudinal de la prolonge est en oblique vers le bas (quelques degrés angulaires), et vers la droite (environ 10 degrés angulaires).

Comme visible sur la figure 2b, les carres 171 à 174 sont soigneusement dressées pour correspondre à ces angles.

Revenant à la figure 2f (et à la figure 2g), le montage s'effectue comme suit :
- les carres 171 à 174 sont bien posées en excellent appui sur la face de la plaque, avec les alésages 2610, 2620 et 2630 positionnés bien en face des alésages 1610, 1620 et 1630 des pattes 161, 162 et 163,
- les trois pattes sont alors rivetées sur la plaque à travers les paires d'alésages 1610-2610, 1620-2620 et 1630-2630,
- la patte 264 ménagée sur la plaque est à l'intérieur du tube formant la prolonge, en appui de frottement sur celle-ci et, là aussi, on procède à un rivetage à travers une paire d'alésages 1640-2640 positionnés pour se correspondre ; le montage avec son rivet 86 est visible sur la figure 2g.

Il est préférable d'avoir un jeu réduit entre les surfaces en contact assemblées par rivet. Le montage d'assemblage devra prendre en compte cette contrainte et assurer un serrage des surfaces lors du rivetage.

Les carres du tube de prolonge qui viennent en appui sur la platine ne sont pas nécessairement limitées à la partie rayonnée (en arc de cercle) au coin du tube. Elles se complètent d'une partie plus ou moins grande du côté du tube, en fonction des efforts à faire transiter par les carres lors de chocs à faible vitesse (ou chocs dits "piéton" ou encore dits avec "réparabilité"). Ces efforts dépendent d'un calcul qui tient compte de la réponse des absorbeurs de chocs, lesquels agissent avant la prolonge.

Préalablement, l'entretoise 6 a été mise en place dans le tube 1, en s'appuyant sur le rebord de l'orifice 16.

La figure 3a montre le tube de prolonge en plus de détails. De même, la figure 3b montre la plaque ou platine de prolonge en plus de détails.

Dans un mode de réalisation particulier, par exemple celui décrit plus haut, la prolonge peut être fabriquée sur une ligne de fabrication intégrée qui comprend :
M1- une première presse, de type SPP (fonctionnant selon le principe "Serrage-Poussée-Poussée" ou "Squeeze-Push-Push"),
M2- une machine spéciale de poinçonnage, de mise en place de l'entretoise et de sertissage,
M3- une deuxième presse, de type SPP,
M4- une deuxième machine spéciale de mise en place de la plaque ("platine") et de rivetage.

Le procédé de fabrication peut s'articuler comme indiqué dans le tableau I ci-après.

**TABLEAU I**

| Etape | Action | Machine |
|---|---|---|
| A | Partant d'un tube de la section droite voulue, façonnage de l'amorce 12 de l'extrémité avant 10 du tube, et évasement à l'extrémité arrière 19 du tube | M1 |
| B | Façonnage de l'amorce 11 à l'extrémité arrière 19 du tube, et calibrage du voisinage de l'extrémité avant 10 pour le passage de l'entretoise 6 | M1 |
| C | Redressage du tube | M1 |
| D | Poinçonnage pour entretoise 6 | M2 |
| E | Pose entretoise - sertissage de celle-ci, à savoir faire le sertissage 16 (collet) visible figure 2g | M2 |
| F | Poinçonnage de trous fins sur la ligne prévue pour la découpe des pattes ou languettes par cisaillage | M3 |
| G | Création des languettes, par cisaillage-roulage (le roulage les plie en même temps) | M3 |
| H | Cisaillage des carres pour appui sur plaque | M3 |
| I | Mise à longueur languette inférieure | M3 |
| J | Poinçonnage des trous situés sur les languettes en vue de recevoir les rivets | M3 |
| K | Pose de la coupelle 5, et son sertissage à l'extrémité arrière 19 du tube | M4 |
| L | Pose de la platine, et son rivetage, à l'extrémité avant 10 du tube | M4 |

Ces indications de fabrication sont données à titre d'exemple non limitatif.

Une prolonge comme celle des figures 2 et 3 s'est avérée nettement meilleure que celle des figures 1, en ce qui concerne le comportement sur chocs répétés à faible vitesse.

On comprendra que la solution mise au point par la demanderesse est la réalisation d'une prolonge qui a pour caractéristique de comprendre un tube en appui sur la plaque avant par l'intermédiaire de ses carres, les faces dudit tube étant munies de découpes en forme de languettes ou pattes assurant la liaison du tube de prolonge avec la plaque avant.

Dans l'exemple décrit, l'assemblage est réalisé par rivetage du tube sur la plaque avant.

Pour ce faire, des pattes peuvent être découpées dans chacune des faces (ou paroi) du tube en son extrémité "côté avant" et repliées à 90° ou selon les angles adéquats lorsque la plaque avant n'est pas assemblée perpendiculairement à l'axe du tube. Lorsque par exemple l'encombrement l'exige, l'une (au moins) des pattes est formée dans la plaque, au lieu de l'être dans le tube de prolonge. C'est ce qui a été décrit plus haut.

Ces pattes présentent une face qui se situe dans le même plan que le plan de la section formée par l'extrémité avant du tube.

Dans l'exemple décrit, les pattes découpées sur le tube de prolonge sont percées d'alésages faisant face à des alésages réalisés sur la plaque avant sur laquelle le tube est mis en appui par ses carres, ces alésages placés vis à vis 2 par 2 permettant un assemblage par rivetage. Le cas échéant, la (ou chaque) patte découpée sur la plaque est percée d'un alésage faisant face à un alésage réalisé dans le tube.

Les dimensions des découpes réalisées sur chacune (ou certaines) des parois du tube en son extrémité sont telles que :
- d'une part les caractéristiques dimensionnelles des carres venant en appui sur la plaque permettent d'assurer une transmission des efforts et du couple lors d'un choc conforme au cahier des charges,
- d'autre part des caractéristiques dimensionnelles des pattes permettent d'assurer l'appui des carres sur la plaque et une liaison tube-plaque conforme au cahier des charges.

Le rivetage permet entre autres de s'affranchir des ZAT de soudage. Ainsi, on bénéficie pleinement des caractéristiques mécaniques du tube profilé et de la plaque, en évitant des caractéristiques locales altérées qui se trouveraient dans les ZAT en cas de soudage.

L'invention n'est pas limitée aux modes de réalisation ci-dessus décrits mais en embrasse toutes les variantes contenues dans le cadre des revendications ci-après, notamment les variantes énoncées ci-après.

Ainsi, de façon générale, le montage comprend au moins une patte ou languettes ménagée à une extrémité de la pièce allongée, et au moins une patte ou languette ménagée dans la première pièce d'extrémité.

La pièce allongée peut être vue comme un tube de section droite généralement polygonale. Mais ce tube n'est pas nécessairement rectiligne. Il peut présenter une ou plusieurs cambrures.

Si les éléments en contact de la plaque et du tube de prolonge sont d'un même matériau, il est possible de réaliser l'assemblage par soudage électrique par point.

Les pattes peuvent être réalisées par découpe dans les flancs du tube de prolonge. Les parties saillantes qui restent dans les coins sont découpées pour former les zones d'appui ou carres.. Dans ce dernier cas, la patte venue de la plaque peut se fixer à l'extérieur. Elle peut aussi s'insérer dans l'alésage (l'intérieur du tube).

Dans ce dernier cas, on pourrait envisager un clipsage ou un emmanchement serrant de la patte à l'intérieur du tube, pourvu que la liaison conserve une bonne résistance au basculement, c'est à dire résiste au couple lié au fait que l'effort n'est pas dans l'axe. On en décrira un exemple plus loin.

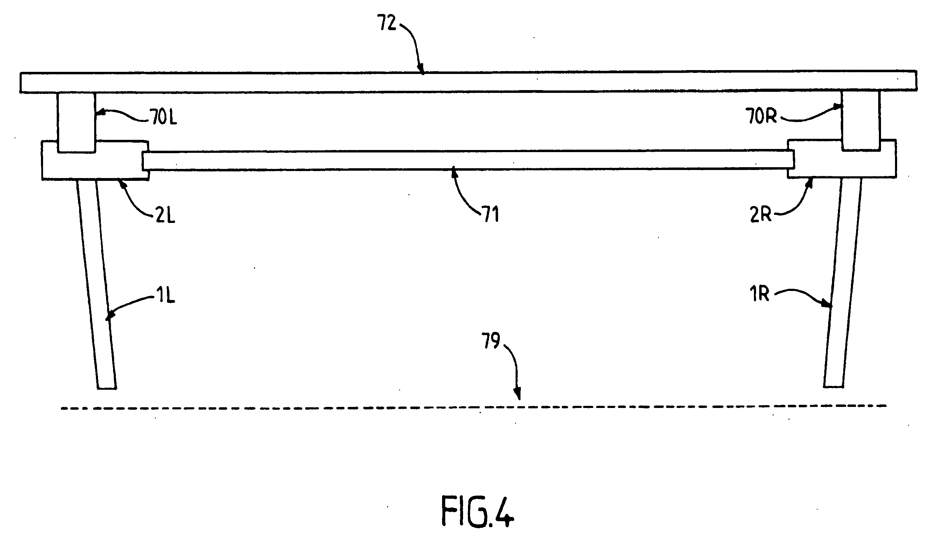

Selon l'invention, le montage global se fait comme indiqué sur la vue de dessus très schématique de la figure 4. On retrouve en 1L et 2L le tube et la platine de prolonge situés à gauche, et de même en 1R et 2R le tube et la platine de prolonge situés à droite, avec une symétrie miroir quant à l'obliquité du tube. Les platines 2L et 2R sont interconnectées par la poutre de liaison 71. Elles sont également interconnectées, par deux absorbeurs de chocs 70L et 70R, à une traverse piéton 72 située tout à fait à l'avant du véhicule, et représentée très schématiquement. Les absorbeurs de chocs sont parfois intégrés à la traverse piéton. Tout aussi schématiquement, le trait tireté référencé 79 désigne la position du châssis du véhicule

La description ci-dessus prévoit un contact direct entre les carres et la plaque, avec une liaison par des pattes venues de matière dans le tube de prolonge (ou la plaque). Il est envisageable que les pattes soient des éléments séparés, bien que la Demanderesse considère actuellement que l'ajout de pièces intermédiaires tend à réduire les performances du montage.

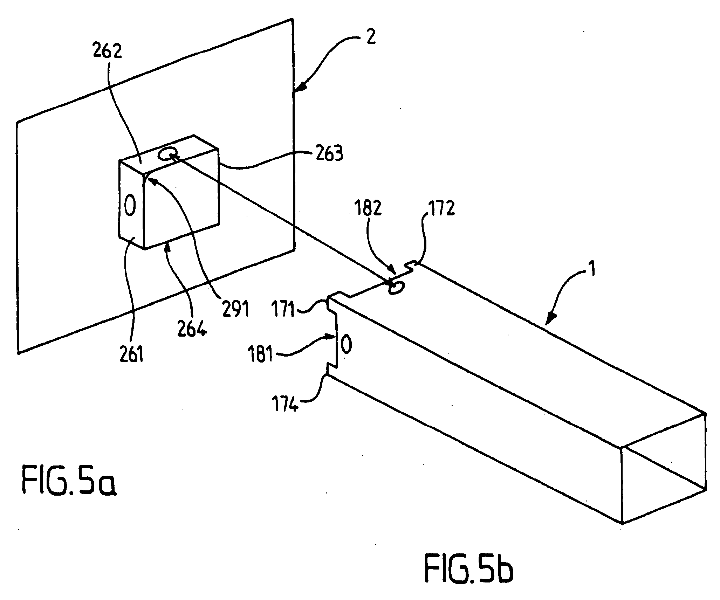

On s'intéresse maintenant à une variante possible de l'invention, illustrée aux figures 5a et 5b. On retrouve le tube 1 et la plaque 2. Ici, les pattes 261 à 264 sont obtenues en un seul bloc par emboutissage de la plaque 1. Dans ce cas, on préfère actuellement que la plaque soit en acier. En fait, les pattes sont maintenant reliées entre elles, et forment les quatre côtés de l'embouti, avec un arrondi en coin, comme illustré en 291. Naturellement, les quatre coins ont le même genre d'arrondi. Le rayon de cet arrondi est supérieur au rayon des arrondis de coin des carres 171 à 174 (173 non visible) du tube. En 181, 182 (autres zones non visibles), il est prévu un dégagement local pour limiter le contact en bout du tube aux carres 171 à 174.

L'assemblage peut se faire par rivets dans les trous visibles sur le dessin, et l'emmanchement Tube /Embouti peut être serré.

Par ailleurs, la description ci-dessus vise essentiellement le cas de la plaque avant de la prolonge. Le même genre de solution peut être appliqué à la liaison entre le tube qui forme la prolonge et son interface arrière.

Bien entendu, certains des moyens décrits ci-dessus peuvent être omis dans les variantes où ils ne servent pas.

La solution d'assemblage par rivetage présente les avantages techniques suivantes :
1. possibilité d'assemblage de matériaux différents
2. possibilité d'assemblage de composants d'épaisseurs très différentes
3. possibilité d'adapter et faire varier l'épaisseur du tube dans sa section d'où allègement du composant
4. absence de déformations dues à l'échauffement lors du soudage d'où meilleures tolérances dimensionnelles du composant et simplification des outillages d'assemblage qui deviennent ainsi moins coûteux
5. absence de contraintes résiduelles et de zones affectées thermiquement modifiant les caractéristiques techniques du composant après assemblage par soudage des différentes pièces d'où meilleur comportement lors d'un choc d'un composant à un autre identique (caractéristiques mécaniques non altérées)
6. diminution des coûts d'assemblage (le rivetage est moins coûteux que le soudage classique avec ou sans fil d'apport)

Des variantes, comme la solution de soudage électrique par point peuvent présenter les mêmes avantages, au moins dans certains cas.

On peut également envisager, au moins lorsque la plaque est réalisée en acier, que des alésages taraudés ou des écrous rapportés permettent la fixation par vis du tube de prolonge, dont les pattes seront munies des perforations correspondantes.

## Revendications

1. Véhicule automobile comprenant une traverse piéton (72), un châssis (79) et, de chaque côté entre la traverse piéton (72) et le châssis (79), un dispositif mécanique, formant élément de structure allongé pour véhicule, destiné à encaisser au moins partiellement certains chocs, le dispositif mécanique comprenant :
- une pièce allongée (1) profilée ou tubulaire de section droite généralement polygonale,
- une première pièce d'extrémité (2), montée à une première extrémité de la pièce allongée, selon un angle proche de la perpendiculaire à l'axe de la pièce allongée, cette première pièce d'extrémité étant fixée à d'autres éléments du véhicule, les premières pièces d'extrémité (2) étant interconnectées par une poutre de liaison (71) et interconnectées par deux absorbeurs de chocs (70) à la traverse piéton (72), les absorbeurs de chocs étant éventuellement intégrés à la traverse pieton (72), véhicule selon lequel pour chaque dispositif mécanique,
- au voisinage de sa première extrémité, la pièce allongée (1) comporte des dégagements, qui laissent subsister des zones ajustées ou carres (171-174), au voisinage d'arêtes de sa section droite,
- il est prévu entre la pièce allongée (1) et la première pièce d'extrémité (2) une fixation rigide qui maintient les zones ajustées, sensiblement en appui direct sur la première pièce d'extrémité,
- lesdites zones ajustées (171-174) étant dimensionnées pour résister à des efforts de compression et à un couple de basculement lors de chocs revendication 1,

2. Véhicule selon la revendication 1, **caractérisé en ce que** pour chaque dispositif mécanique, ladite fixation rigide comprend au moins un rivet (82,86).

3. Véhicule selon l'une des revendications 1 et 2, **caractérisé en ce que** pour chaque dispositif mécanique, certains au moins des dégagements sont réalisés sous la forme d'une languette ou patte repliée (161,162,163), qui contribue à ladite fixation rigide.

4. Véhicule selon l'une des revendications 1 à 3, **caractérisé en ce que** la première pièce d'extrémité (2) comporte une découpe en forme de languette ou patte repliée (264), qui contribue à ladite fixation rigide.

5. Véhicule selon la revendication 4, **caractérisé en ce que** chaque dispositif comporte au moins une patte ou languette (161,162,163) ménagée à une extrémité de la pièce allongée (1), et au moins une patte ou languette (264) ménagée dans la première pièce d'extrémité (2).

6. Véhicule selon la revendication 5, **caractérisé en ce que** chaque dispositif comporte trois pattes ou languettes (161,162,163) ménagées à une extrémité de la pièce allongée (1) , et une patte ou languette (264) ménagée dans la première pièce d'extrémité (2).

7. Véhicule selon la revendication 6, **caractérisé en ce que** ladite fixation rigide comprend au moins un rivet pour chaque patte ou languette (161,162,163, 264).

8. Véhicule selon l' une des revendications 1 à 6, **caractérisé en ce que** ladite fixation rigide comprend au moins un point de soudure pour certaines au moins des pattes ou languettes.

9. Véhicule selon l'une des revendications 1 à 6, **caractérisé en ce que** ladite fixation rigide comprend au moins un ensemble vis-filetage pour certaines au moins des pattes ou languettes.

10. Véhicule selon l'une des revendications précédentes, **caractérisé en ce que** chaque dispositif comprend une seconde pièce d'extrémité (5), montée à l'autre extrémité (19) de la pièce allongée, cette seconde pièce d'extrémité étant prévue pour permettre un appui sur d'autres éléments du véhicule.

11. Véhicule selon l'une des revendications précédentes, **caractérisé en ce qu'**il est prévu un assemblage par sertissage, à l'une des extrémités (10, 19) de la pièce allongée.

12. Véhicule selon l'une des revendications précédentes, **caractérisé en ce que** certaines au moins des pattes (264) sont formées par emboutissage de la plaque.

## Claims

1. Motor vehicle comprising a pedestrian crossbar (72), a chassis (79) and, on each side between the pedestrian crossbar (72) and the chassis (79), a mechanical device forming an elongated structural element of a vehicle, intended to at least partially absorb some impacts, the mechanical device comprising:
- a profiled or tubular elongate part (1) of generally polygonal cross-section,
- a first end part (2) mounted at a first end of the elongate part, at an angle that is substantially perpendicular to the axis of the elongate part, this first end part being fixed to other elements of the vehicle, the first end parts (2) being interconnected by a connecting bar (71) and interconnected by two crash cushions (70) to the pedestrian crossbar (72), the crash cushions being optionally integrated with the pedestrian crossbar (72),
vehicle according to which, for each mechanical device,
- close to its first end, the elongate part (1) comprises cut-outs which create adjusted zones or edges (171-174) in the vicinity of edges of its cross-section,
- between the elongate part (1) and the first end part (2) there is a rigid fixing which holds the adjusted zones substantially bearing directly on the first end part,
- the adjusted zones (171-174) being dimensioned so as to withstand compressive forces and a tilting torque during impact.

2. Vehicle according to claim 1, **characterized in that**, for each mechanical device, the rigid fixing comprises at least one rivet (82, 86).

3. Vehicle according to one of claims 1 and 2, **characterized in that**, for each mechanical device, at least some of the cut-outs are made in the form of a bent back tab or lug (161, 162, 163) which contributes to said rigid fixing.

4. Vehicle according to one of claims 1 to 3, **characterized in that** the first end part (2) comprises a cut-out in the form of a bent-back tab or lug (264) which contributes to said rigid fixing.

5. Vehicle according to claim 4, **characterized in that** each device comprises at least one tab or lug (161, 162, 163) provided at one end of the elongate part (1), and at least one tab or lug (264) provided in the first end part (2).

6. Vehicle according to claim 5, **characterized in that** each device comprises three tabs or lugs (161, 162, 163) formed at one end of the elongate part (1) and one tab or lug (264) provided in the first end part (2).

7. Vehicle according to claim 6, **characterized in that** the said rigid fixing comprises at least one rivet for each tab or lug (161, 162, 163, 264).

8. Vehicle according to one of claims 1 to 6, **characterized in that** the said rigid fixing comprises at least one spot weld for at least some of the tabs or lugs.

9. Vehicle according to one of claims 1 to 6, **characterized in that** the said rigid fixing comprises at least one screw/thread assembly for at least some of the tabs or lugs.

10. Vehicle according to one of the preceding claims, **characterized in that** each device comprises a second end part (5) mounted at the other end (19) of the elongate part, this second end part being provided to allow it to bear on other elements of the vehicle.

11. Vehicle according to one of the preceding claims, **characterized in that** a crimped joint is provided at one of the ends (10, 19) of the elongate part.

12. Vehicle according to one of the preceding claims, **characterized in that** at least some of the lugs (264) are formed by stamping the plate.

## Patentansprüche

1. Kraftfahrzeug mit einer Fußgängertraverse (72), einem Chassis (79) und, auf jeder Seite zwischen der Fußgängertraverse (72) und dem Chassis (79), einer mechanischen Vorrichtung, die ein Element von länglicher Struktur für ein Fahrzeug bildet, das dazu dient, wenigstens teilweise gewisse Schläge beziehungsweise Aufpralls zu kassieren, wobei die mechanische Vorrichtung aufweist:
- ein längliches Teil (1), das profiliert oder rohrförmig, von allgemeinem polygonalen Querschnitt ist,
- ein erstes Endteil (2), das an einem ersten Ende des länglichen Teils angebracht ist, gemäß einem Winkel nahe der Senkrechten zur Achse des länglichen Teils, wobei das erste Endteil an anderen Elementen des Fahrzeugs befestigt ist, wobei die ersten Endteile (2) durch einen Verbindungsbalken (71) miteinander verbunden sind und durch zwei Stoßdämpfer (70) mit der Fußgängertraverse (72) verbunden sind, wobei die Stoßdämpfer gegebenenfalls in die Fußgängertraverse (72) integriert sind und wobei jede mechanische Vorrichtung dieses Fahrzeugs
- in der Nähe seines ersten Endes, das längliche Teil (1) Ausnehmungen aufweist, die anliegende oder eckige Zonen (171 - 174) frei lassen, in der Nähe der Kanten des Querschnitts,
- zwischen dem länglichen Teil (1) und dem ersten Endteil (2) eine starre Befestigung vorgesehen ist, die die anliegende Zone im Wesentlichen in direkter Anlage auf das erste Endteil hält,
- die anliegenden Zonen (171 - 174) so dimensioniert sind, dass sie Druckkräften und einem Schwenkmoment bei den Aufprallen widerstehen.

2. Fahrzeug nach Anspruch 1, **dadurch gekennzeichnet, dass** für jede mechanische Vorrichtung die starre Befestigung wenigstens einen Niet (82, 86) aufweist.

3. Fahrzeug nach Anspruch 1 oder 2, **dadurch gekennzeichnet, dass** für jede mechanische Vorrichtung wenigstens bestimmte der Ausnehmungen in Form einer kleinen Zunge oder gefalteten Lasche (161, 162, 163) ausgebildet sind, die an der starren Befestigung teilnimmt.

4. Fahrzeug nach einem der Ansprüche 1 bis 3, **dadurch gekennzeichnet, dass** das erste Endteil (2) einen Ausschnitt in Form der kleinen Zunge oder gefalteten Lasche (264) aufweist, die an der starren Befestigung teilnimmt.

5. Fahrzeug nach Anspruch 4, **dadurch gekennzeichnet, dass** jede Vorrichtung wenigstens eine Lasche oder kleine Zunge (161, 162, 163) aufweist, die an einem Ende des länglichen Teils (1) ausgebildet ist, und wenigstens eine Lasche oder kleine Zunge (264) aufweist, die in dem ersten Endteil (2) ausgebildet ist.

6. Fahrzeug nach Anspruch 5, **dadurch gekennzeichnet, dass** jede Vorrichtung drei Laschen oder kleine Zungen (161, 162, 163) aufweist, die an einem Ende des länglichen Teils (1) ausgebildet sind, und eine Lasche oder kleine Zunge (264) aufweist, die in dem ersten Endteil (2) ausgebildet ist.

7. Fahrzeug nach Anspruch 6, **dadurch gekennzeichnet, dass** die starre Befestigung wenigstens einen Niet für eine jede Lasche oder kleine Zunge (161, 162, 163, 264) aufweist.

8. Fahrzeug nach einem der Ansprüche 1 bis 6, **dadurch gekennzeichnet, dass** die starre Befestigung wenigstens einen Schweißpunkt für wenigstens gewisse der Laschen oder kleinen Zungen aufweist.

9. Fahrzeug nach einem der Ansprüche 1 bis 6, **dadurch gekennzeichnet, dass** die starre Befestigung wenigstens eine Anordnung Schraube-Gewinde wenigstens für bestimmte der Laschen oder kleinen Zungen aufweist.

10. Fahrzeug nach einem der vorhergehenden Ansprüche, **dadurch gekennzeichnet, dass** jede Vorrichtung ein zweites Endteil (5) aufweist, das am anderen Ende (19) des länglichen Teils angebracht ist, wobei dieses zweite Endteil vorgesehen ist, um eine Anlage auf andere Elemente des Fahrzeugs zu erlauben.

11. Fahrzeug nach einem der vorhergehenden Ansprüche, **dadurch gekennzeichnet, dass** eine Zusammenfügung durch Klemmen an einem der Enden (10, 19) des länglichen Teils vorgesehen ist.

12. Fahrzeug nach einem der vorhergehenden Ansprüche, **dadurch gekennzeichnet, dass** wenigstens bestimmte der Laschen (264) durch Tiefziehen der Platte gebildet sind.
